# EUROPEAN PATENT SPECIFICATION

(11) **EP 0 302 573 B1**
(45) Date of publication and mention of the grant of the patent: **10.03.1993**
(21) Application number: 88201682.7
(22) Date of filing: 03.08.1988
(51) Int. Cl.: B01D 53/18, B01D 53/34, B01J 19/24, B01D 45/12

(54) **A method and a device for treating or mixing components in gas or liquid streams**
Verfahren und Einrichtung für die Behandlung oder Mischung von Komponenten in Gas -oder Flüssigkeitsströmen
Procédé et dispositif de traitement ou de mélange de constituants dans des courants gazeux ou liquides

(30) Priority: 04.08.1987 NL 8701837
(43) Date of publication of application: 08.02.1989
(73) Proprietor: Beusen, Gerardus Louis, NL-3862 AT Nijkerk (NL)
(72) Inventor: Beusen, Gerardus Louis, NL-3862 AT Nijkerk (NL)
(74) Representative: Smulders, Theodorus A.H.J., Ir.

(56) References cited:
- EP-A- 0 200 695
- DE-A- 1 442 734
- GB-A- 376 555
- US-A- 4 221 655

## Description

This invention relates to a method of removing, possibly by chemical binding, contaminants in a fluid, such as a gas or liquid stream, in which the fluid is contacted with neutralizing and/or absorbing substances and the resulting mixing or reaction products are separated.

One example of an appliance wherein this method is performed is the cyclone-shaped reaction chamber(s) wherein absorption/neutralizing substances are contacted with contaminated flue gases of refuse incinerators.

In these, the cyclones' first function is the capture of sparks entrained from the incinerators in those cases wherein cloth filters are used to remove fly ash and reaction products from the flue gases, before said flue gases are discharged into the atmosphere through a chimney stack. The contact between the flue gases and the absorption/neutralizing substances added thereto in the cyclones is such that a part of the acid components from the flue gases are bonded and neutralized. Tests have shown that the neutralizing effect inside the cyclones is higher than that of the neutralizing layer formed on the downstream filter cloths. Yet there is evidence that, in the case of heavy loads with acid components as regularly occurring in practice in flue gases, the total efficiency of upstream cyclones and downstream cloth filters, is insufficient to meet the emission standards recently laid down in national and international regulations.

The alternative option would be for wet flue gas cleaning, with which these standards can be met. The consequence of that, however, is that it will increase investments by a factor of 2 or 3 as a result of the elaborate processing involved in this method, on top of which, in most cases, additional waste water purification is required.

It is an object of the present invention to improve the dry flue gas purification with cyclones in such a manner that emission standards are met and expected by even lower values will result, thus achieving a particular improvement in the solution of environmental problems in respect of, for example, refuse incinerators. This can be realized at quite acceptable prices at that.

To that effect, according to the present invention, by application of the features recited in the characterizing clause of claim 1, the components entering the cyclone are not only centrifuged but the light fractions in the flue gases,including the major part of the gaseous acid components, are prevented from diffusing directly through the flue gas stream to the cyclone exit, so that the contact with the neutralizing heavier components is too short.

According to the present invention, the light fractions in the flue gases, together with the heavier fractions are jointly centrifuged after entering the cyclones, while in contrast to the situation in the present design within cyclones, increasingly intensive contact is enforced by increased concentration and at the same time strongly increased velocity by means of an inverted cone provided preferably in the centre of the cyclone. This forces the light (i.e. the acid) components in the flue gases to react with the neutralizing substances immediately, intensively and for a prolonged period of time.

By repeating the inverted cone construction, as indicated above, at a lower level, there is obtained a reversal of the flue gas motion, whereby the descending high-velocity whirl is converted into a rising initially expanding whirl of relatively low velocity. According as the whirl thereafter at higher level again approaches the centre of the cyclone, the acceleration and the concentration are considerably increased. The heavier fractions in the strongly accelerated rising whirl are again mixed intensively with the light fractions (including those to be neutralized) in the gas stream. Repetition of the above inverted cone constructions in the interior of the cyclone will increase the effect of mixing and neutralizing acid components in the flue gases. Moreover, the effect of mixing and chemical reaction can be increased per "floor" by rendering the distance between the internal cones adjustable. In this manner, substantially higher vortex speeds (and hence higher mixing efficiency) can be achieved than provided initially (i.e. upon entry into the cyclone). The variation of the distance beteen the internal cones can be controlled by coupling the adjustment to e.g. the measured acidity of the flue gases prior to their discharge to the chimney stack. The last fixed cone can be extended to a cylindrical bin where the vortex can be reduced to such a low velocity - by properly dimensioning the cylinder - that solid components (fly ash, chemical reaction products and possible excess of neutralizing substances) are separated. The purified gas stream is removed through a central exhaust within the lowest cylinder. Naturally, exhaust from the installation need not necessarily take place in the above manner. It is also possible for instance to select tangential exhaust from the circumference. Another possibility could be: exhaust from the top of the device in the case where one "floor" would be sufficient to attain the required efficiency. If an enlargement of the lowest cone is selected, as mentioned above, there is automatically produced a collecting bin which can selectively perform a number of useful functions:
a) temporary storage of separated and/or reacted products prior to discharge into a container;
b) return of the separated products to the inlet of the cyclone or one of the floors, to thereby allow any neutralizing material not yet entirely reacted to participated again in the process.

Some embodiments of apparatus according to the present invention will now be described, by way of example, with reference to the accompanying drawings, in which:
Fig. 1 diagrammatically shows the operation of a conventional cyclone;
Fig. 1A is a cross-sectional view according to the arrow A in Fig. 1;
Fig. 2 shows in top plan view the operation of a cyclone according to the present invention;
Fig. 3 is a diagrammatic cross-sectional view of the cyclone shown in Fig. 2;
Fig. 4 is a view similar to Fig. 3 but showing the top of the cyclone illustrated in Fig. 3 and its operation in more detail;
Fig. 5 is a view similar to Fig. 4, but in a further stage of the fluid motion;
Fig. 6 is a similar view showing fluid motion subsequent to the situation shown in Fig. 5; and
Fig. 7 shows the completion of the process by collecting reaction products.

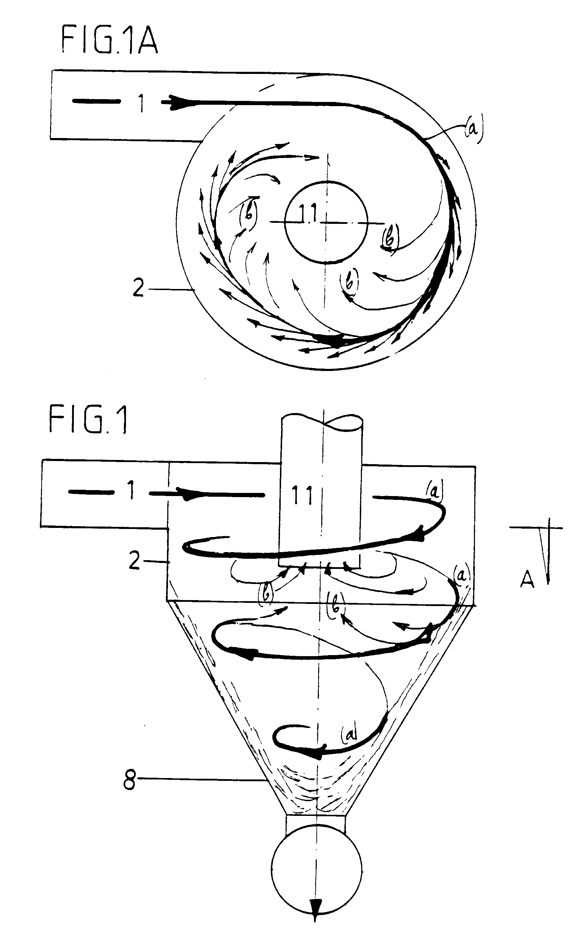

Fig. 1 is a cross-sectional view of a conventional cyclone construction, showing the centrifugal separation of heavier fly ash, neutralizing substances and reaction products via the descending vortex (a) and the rapid diffusion of the light (e.g. acid) components (b), including light solid components of the flue gases, which are subsequently discharged to filters upstream of the chimney stack. The flue gases mixed with absorbing an/or neutralizing substances are introduced tangentially through 1 into the cylindrical portion(2) where they are contacted with each other. The heavier components, such as fly ash and a part of the reaction material, descend via vortex (a) into the discharge or collecting hopper 8. The lighter fractions, such as acid gases, light fly ash particles and residual reaction material, are separated from vortex (a) directly at the open bottom of exhaust pipe 11 and disappear through vortex (b) in fractions of seconds through pipe 11. The reaction time available for neutralizing undesirable components is therefore very short. In those cases where the percentage of undesirable chemical components in the gas stream is high, the added neutralizing and/or absorption agent will react insufficiently. Thus the composition of the flue gases discharged via 11 will fail to meet the recently raised emission standards.

A substantial excess of neutralizing agent has proved unable to solve the problem and moreover creates two additional problems:
- the extra cost connected with the discharge of substantial amounts of residues to dumping sites which
- can accept these materials only at increase rates.
The residues, in fact, require additional provisions at the dumping sites to control the water economy and quality.

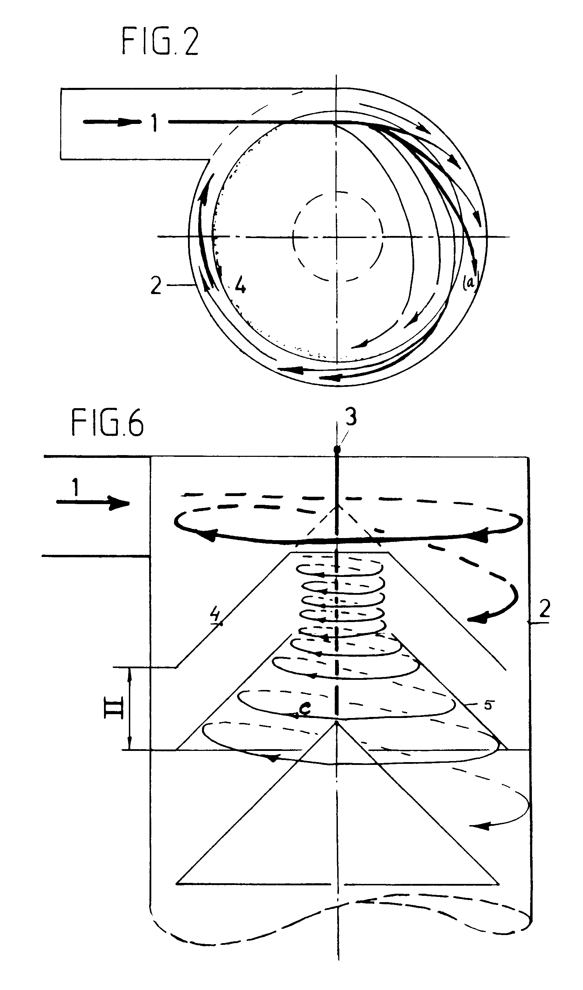

It is an object of the present invention to avoid these drawbacks and to positively improve the result in a manner as shown in principle in Figs. 2-7.

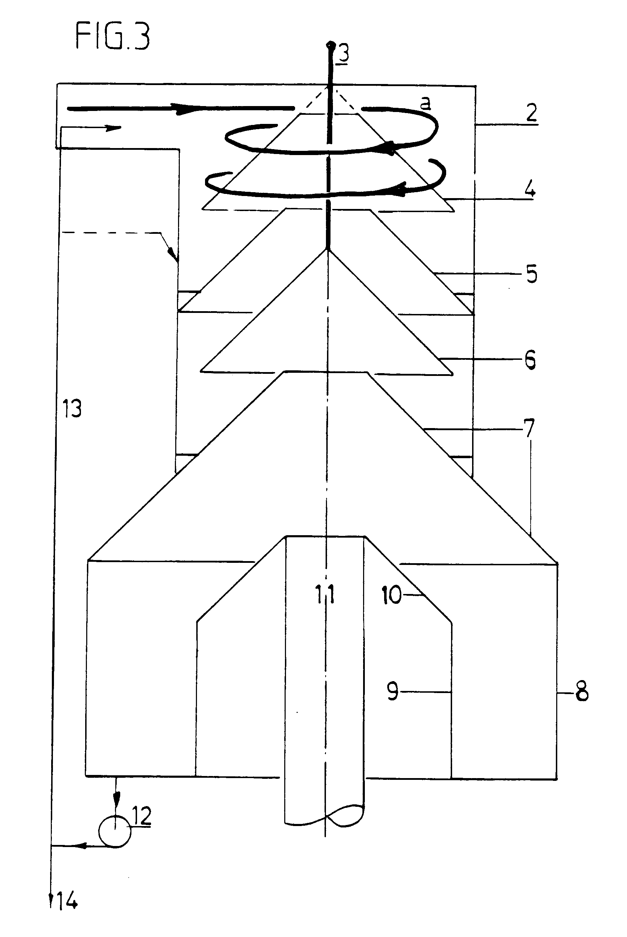

As shown in Figs. 2 and 3, flue gases are introduced tangentially through 1 into the cylinder 2 - the cyclone - possibly with added neutralizing substances. The additions of these and/or other substances, naturally, can also take place after the entry, e.g. through the apex of cone 4 or the base of cone 5.

Undesirable components, together with the heavier components (fly ash and neutralizing substances) are centrifuged in cylinder 2, while in contrast to the situation described for the cyclones of the prior art, increasingly intensive contact is promoted by increased concentration and at the same time strongly increase velocity of vortex (a) by means of an inverted cone 4 provided (preferably) in the centre of the cyclone.

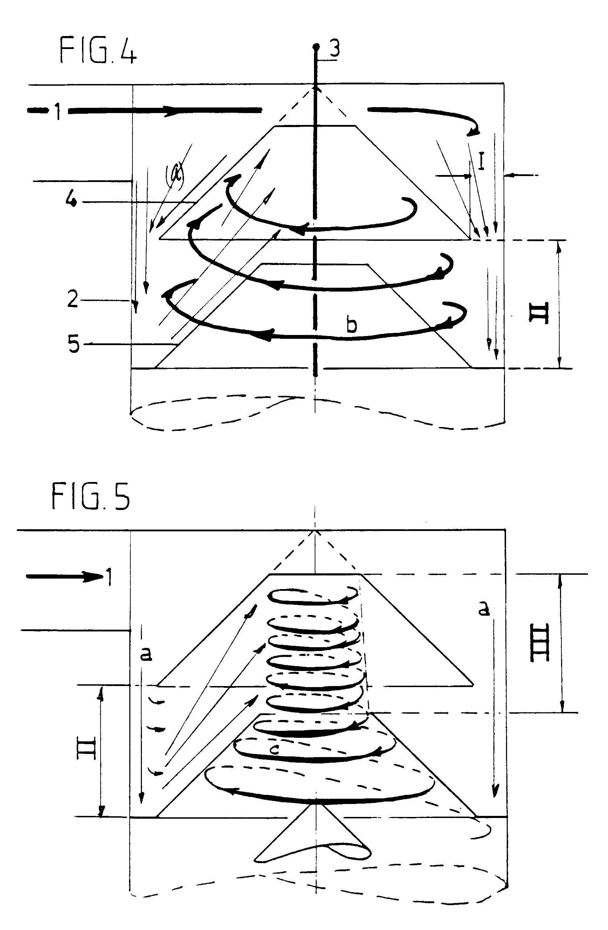

As appears from the detail shown in Fig. 4, the centrality suspended inverted cone 4 products initially the accelerated descending vortex (a) shown in Fig. 3. This vortex is deflected 180° from its original direction by the bottom of cone 5 and has as the only way out the cylindrical cross-section II, being substantially larger than cross-section I, in other words, besides a reversal through an angle of 180°, a sudden expansion takes place. This is highly favourable to additoinal vortex effects, resulting in additional mixing and enhanced chemical reactions. The cyclomic gas motion cannot become suddenly rectilinear, for a new vortex (b) is formed, as model tests have shown, which ascends according to the dotted lines shown in the drawings between the two cones at increasingly higher vertical and tangential speed = mixing speed = chemical reaction speed. The absorption/neutralizing agent is enforced to react for the second time.

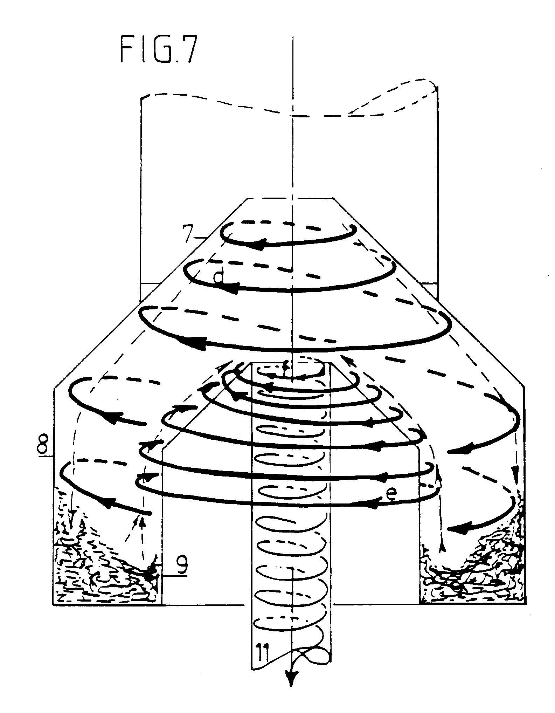

Fig. 5 shows the same cyclone detail as Fig. 4 with a representation of the gas motions which are developing in a stage further than that shown in Fig. 4. From cross-section III, a substantially 180° reversal of gas motions takes place again. It should be noted that a 180° reversal, as used herein, should be construed to mean the eventual effect in a vertical sense. The actual gas motion remains tangential, resulting a vortex ascending or descending, as a whirl, perpendicularly. In cross-section III, such a 180° reversal takes place again. Vortex (c) is formed, resulting in very high speeds, in other words, a very high mixing effect and very high chemical reaction speeds. The absorption/neutralizing agent is enforced to react for the third time, now in the second "floor".

Fig. 6 shows the possible sequel to the situation shown in Fig. 5. By repeating this construction over various "floors", the reaction efficiency can, in fact, be increase to an unlimited extent.

Fig. 7 shows one of the possibilities to complete the reaction process, using the same principle according to the present invention, with the capture of reaction products. When the wall of cone 7 is extended, the speed of vortex (d) can be reduced by dimensioning of diameters so that the solid components: fly ash, chemical reaction products and any excess of neutralizing substances are deposited within cylinder 8. The vortex (d) will automatically produce vortex (e), which now ascends according to the dotted lines and thereafter discharges through the central exhaust the now strongly chemically purified gases through 11.

The increase in efficiency of the deposition of solids results in a lower load of the filters, which reduces the cost of energy and maintenance. The increase in efficiency of the chemical reactions means a saving in chemicals and residual materials, hence lower exploitation cost which, by means of the method and device according to the present invention, can even be lower than those of known installations.

It will be clear that where reference is made to flue gases and acid components, the principle of the present invention also applies to other fluids, e.g. industrial exhaust gases or liquids and basic components in which case naturally other absorption/neutralizing agents can play a role. Where the term "absorption" is used in the specification, the term "adsorption" or a similar term may be used instead.

## Claims

1. A method of removing, possibly by chemical binding, contaminants in a fluid, such as a gas or liquid stream, in which the fluid is contacted with neutralizing and/or absorbing substances and is brought into a whirling motion (a), the resulting mixing or reaction products are separated folling the contacting process, characterized in that the mixture of fluid is given a whirling motion (a) while already containing neutralizing and/or absorbing substances, the whirling motion (a) is accelerated with simultaneous compression of the mixture, the compressed whirl is forced to deflect over substantially 180° and is forced to expand and subsequently accelerated and compressed (b,c) again, the process is repeated at will and the last formed whirl (c) is decelerated in such a manner that solids are deposited form the whirling mixture and discharged.

2. An apparatus for performing the method as claimed in claim 1, characterized by a a cylindrical chamber (2) having at its closed top a tangential inlet as well as a conical insert (4) shut off at its narrow top relatively to the cylindrical chamber (2) and located with its lower edge at a short interspace (I) form the cylindrical wall of said chamber (2), characterized by a second, frusto-conical insert (5) provided at a variable distance (II) underneath the hollow first conical insert (4), said second conical insert (5) having an open top and its wider lower end being sealingly connected to the wall of the cylindrical chamber (2).

3. Apparatus as claimed in claim 2, characterized in that the top end of the first cone (4) or of the second cone (5) is connected to a central outlet (11) (Fig. 3). 2

4. Apparatus as claimed in claim 2, characterized in that underneath the assembly of the first closed-topped cone (4) and the subjacent second open-topped truncated cone (5), together forming a floor, there is provided at least one further similar floor (6, 7) in the chamber (2).

5. Apparatus as claimed in claim 4, characterized in that the distance between floors (4, 5, 6, 7) is variable.

6. Apparatus as claimed in claim 4 or 5, characterized in that the lower cone (7) of the lower floor (6, 7) connects to a subjacent collecting space (8) of larger dimensions than the cylindrical chamber (2), in which wide space (8) an exhaust 11 extends centrally downwards the dimensions of the collecting space (8) being chosen in such a manner that in a given cleaning process, the reaction products and/or the excess of neutralizing substances, through deceleration of the whirl, are deposited in said connecting space (8) functioning as a storage space.

7. Apparatus as claimed in any one of claims 3-6, characterized by a solids discharge to a container, to a recirculation pipe and/or to a downstream filtering device at each desired level of the chamber (2).

## Patentansprüche

1. Verfahren zur Entfernung, möglicherweise durch chemische Bindung, von Verunreinigungen in einem Fluid, wie einem Gas- oder Flüssigkeitsstrom, in dem das Fluid mit neutralisierenden und/oder absorbierenden Substanzen in Kontakt gebracht und in eine Wirbelbewegung (a) versetzt wird, die erhaltenen Mischungs- oder Reaktionsprodukte nach dem Kontaktierungsprozeß getrennt werden, dadurch gekennzeichnet, daß die Fluidmischung in eine Wirbelbewegung (a) versetzt wird, während sie schon neutralisierende und/oder absorbierende Substanzen enthält, die Wirbelbewegung (a) bei gleichzeitiger Kompression der Mischung beschleunigt wird, der komprimierte Wirbel zu einer Ablenkung von im wesentlichen 180° gezwungen wird, und zur Expansion und nachfolgend wieder Beschleunigung und Kompression (b, c) gezwungen wird, der Prozeß nach Wunsch wiederholt wird und der zuletzt gebildete Wirbel (c) in einer solchen Weise verlangsamt wird, daß Feststoffe aus der wirbelnden Mischung ausgeschieden und abgesondert werden.

2. Vorrichtung zur Durchführung des Verfahrens nach Anspruch 1, gekennzeichnet durch eine zylindrische Kammer (2), die an ihrem geschlossenen oberen Ende eine tangentiale Einlaßöffnung aufweist, sowie einen konischen Einsatz (4), der an seinem schmalen Ende relativ zur zylindrischen Kammer (2) abgeschlossen ist und mit seinem unteren Rand in einem kurzen Abstand (I) von der zylindrischen Wand der genannten Kammer (2) angeordnet ist, gekennzeichnet durch einen zweiten, kegelstumpfförmigen Einsatz (5), der in einem variablen Abstand (II) unter dem hohlen ersten konischen Einsatz (4) vorgesehen ist, wobei der genannte zweite konische Einsatz (5) ein offenes oberes Ende aufweist und sein breiteres unteres Ende dichtend mit der Wand der zylindrischen Kammer (2) verbunden ist.

3. Vorrichtung nach Anspruch 2, dadurch gekennzeichnet, daß das obere Ende des ersten Konus (4) oder des zweiten Konus (5) mit einer zentralen Auslaßöffnung (11) (Fig. 3) verbunden ist.

4. Vorrichtung nach Anspruch 2, dadurch gekennzeichnet, daß unter der Anordnung des ersten oben geschlossenen Konus (4) und des sich darunter anschließenden zweiten oben offenen Kegelstumpfs (5), die zusammen einen Boden bilden, mindestens ein weiterer gleicherartiger Boden (6, 7) in der Kammer (2) vorgesehen ist.

5. Vorrichtung nach Anspruch 4, dadurch gekennzeichnet, daß der Abstand zwischen den Böden (4, 5, 6, 7) variabel ist.

6. Vorrichtung nach Anspruch 4 oder 5, dadurch gekennzeichnet, daß der untere Konus (7) des unteren Bodens (6, 7) mit einem sich darunter anschließenden Sammelraum (8) von größeren Abmessungen als die zylindrische Kammer (2) verbunden ist, wobei in dem weiten Raum (8) sich ein Auslaß 11 in der Mitte nach unten erstreckt, die Abmessungen des Sammelraumes (8) so gewählt sind, daß bei einem gegebenen Reinigungsprozeß die Reaktionsprodukte und/oder der Überschuß an neutralisierenden Substanzen durch die Verlangsamung des Wirbels in den genannten Verbindungsraum (8) ausgeschieden werden, der als Lagerraum dient.

7. Vorrichtung nach einem der Ansprüche 3 bis 6, gekennzeichnet durch eine Feststoffabsonderung in einen Behälter, in ein Rückführungsrohr und/oder in eine stromabwärtige Filtervorrichtung in jeder gewünschten Höhe der Kammer (2).

## Revendications

1. Procédé d'élimination, éventuellement par combinaison chimique, de polluants d'un fluide, tel que courant de gaz ou de liquide, dans lequel le fluide est mis en contact avec des substances neutralisantes et/ou absorbantes et est mis en mouvement tourbillonnaire (a), et les produits de mélange ou de réaction obtenus sont séparés après l'opération de mise en contact, caractérisé par le fait qu'un mouvement tourbillonnaire (a) est donné au mélange de fluide alors qu'il contient déjà des substances neutralisantes et/ou absorbantes, le mouvement tourbillonnaire (a) est accéléré avec compression simultanée du mélange, le tourbillon comprimé est contraint à dévier de manière générale de 180 degrés et est contraint à se dilater et est ensuite de nouveau accéléré et comprimé (b, c), le processus est répété à volonté et le dernier tourbillon formé (c) est décéléré de façon telle que les solides se déposent en se séparant du mélange tourbillonnant et soient évacués.

2. Appareil pour la mise en oeuvre du procédé selon la revendication 1, caractérisé par une chambre cylindrique (2) ayant à sa partie supérieure fermée une entrée tangentielle ainsi qu'un élément rapporté conique (4) obturé à son sommet étroit, relativement à la chambre cylindrique (2), et dont le bord inférieur est situé à une faible distance (I) de la paroi cylindrique de la chambre (2), caractérisé un second élément rapporté tronconique (5) prévu à une distance variable (II) au-dessous du premier élément rapporté conique creux (4), ce second élément rapporté conique (5) étant ouvert en haut et ayant son extrémité inférieure plus large jointe de manière étanche à la paroi de la chambre cylindrique (2).

3. Appareil selon la revendication 2, caractérisé par le fait que l'extrémité supérieure du premier cône (4) ou du second cône (5) est reliée à une sortie centrale (11) (figure 3).

4. Appareil selon la revendication 2, caractérisé par le fait qu'au-dessous de l'ensemble du premier cône fermé en haut (4) et du second cône tronqué ouvert en haut situé dessous (5), qui forment ensemble un plateau, est prévu dans la chambre (2) au moins un autre plateau semblable (6, 7).

5. Appareil selon la revendication 4, caractérisé par le fait que la distance entre les plateaux (4, 5, 6, 7) est variable.

6. Appareil selon l'une des revendications 4 et 5, caractérisé par le fait que le cône inférieur (7) du plateau inférieur (6, 7) se joint à un espace collecteur situé dessous (8) de plus grandes dimensions que la chambre (2) dans lequel un conduit d'évacuation (11) s'étend au centre vers le bas, les dimensions de cet espace collecteur (8) étant choisies de façon telle que, dans un processus d'épuration donné, les produits de réaction et/ou l'excès de substances neutralisantes, par décélération du tourbillon, se déposent dans cet espace collecteur (8) jouant le rôle d'espace de stockage.

7. Appareil selon l'une des revendications 3 à 6, caractérisé par une évacuation de solides vers un récipient, vers un tuyau de recyclage et/ou vers un dispositif aval de filtration à chaque niveau désiré de la chambre (2).
